# EUROPEAN PATENT SPECIFICATION

(11) **EP 1 980 505 B1**
(45) Date of publication and mention of the grant of the patent: **27.02.2013**
(21) Application number: 08251050.4
(22) Date of filing: 25.03.2008
(51) Int. Cl.: B65G 21/20, B65H 3/12, B65G 59/04

(54) **Apparatus for placing battery plates in a line**
Vorrichtung zur Platzierung von Batterieplatten in einer Reihe
Appareil pour placer des plaques de batterie en ligne

(30) Priority: 11.04.2007 GB 0707004; 11.04.2007 US 911190 P
(43) Date of publication of application: 15.10.2008
(73) Proprietor: TBS ENGINEERING LIMITED, Elmstone Hardwicke Cheltenham Gloucestershire GL50 1JJ (GB)
(72) Inventor: Barge, Christopher S, Bristol BS16 1WL (GB)
(74) Representative: Butler, Daniel James

(56) References cited:
- EP-A1- 1 295 823
- DE-A1- 1 923 440
- DE-A1- 1 923 441
- FR-A- 1 546 148
- GB-A- 2 092 117

## Description

This invention relates to apparatus for placing battery plates in a line from a stack of plates.

In the applicant's co-pending application PCT/GB07/000835 a novel and particularly quick apparatus for placing battery plates in a line from a stack of plates is described. The specific embodiment relies on a carousel of vacuum heads. The apparatus works extremely well, but it has a high and expensive component count and requires particularly sophisticated control.

DE1923441 describes a battery plate transport mechanism having suction heads carried on an endless belt, in line with the preamble of claim 1.

The present invention consists in the characterising portion of claim 1.

This approach has a number of advantages. Firstly the component count is significantly decreased, in particular because the vacuum chamber does not have to move; it is only the endless belt that needs to move. Secondly the application of the vacuum is strictly along the longitudinal axis of the stack, whereas in the aforementioned PCT application, the vacuum sweeps over the plate. Conveniently, the aerodynamic effect of the moving belt is to reduce the pressure immediately above the plate and cause the uppermost plate to separate from the stack, before the vacuum is applied as the perforate portion passes over the vacuum chamber.

Conveniently the vacuum chamber has an open or perforate wall over which the perforate portions pass and, additionally or alternatively, a valve may be provided for determining whether or not the vacuum chamber is at a negative pressure.

There may be at least two elevators spaced in the direction of travel of the belt and a vacuum chamber may be associated with each elevator.

In a particularly convenient construction, the apparatus includes a body around which the belt runs and the body defines two sets of vacuum chambers; the first set including the first mentioned vacuum chamber or chambers and a second set including one or more chambers for providing, with the first set, a continuous vacuum path from the datum region to the release position.

The second set of vacuum chambers may provide a continuous constant vacuum so that plates are held to the belt as they move to the release position. At the release position it is preferred that there is a further switchable vacuum chamber, so that the plate can be actively released, but the release position could be formed simply by an absence of a vacuum chamber at that location.

Although the invention has been defined above, it is to be understood that it includes any inventive combination of the features set out above or in the following description.

The invention may be performed in various ways and a specific embodiment will be described, by way of example, with reference to the accompanying drawings in which:
Figure 1 is a side view, partly in section, of the apparatus for lifting plates;
Figure 2 is a plan view of the apparatus of Figure 1; and
Figure 3 is a scrap section through one of the vacuum chambers.

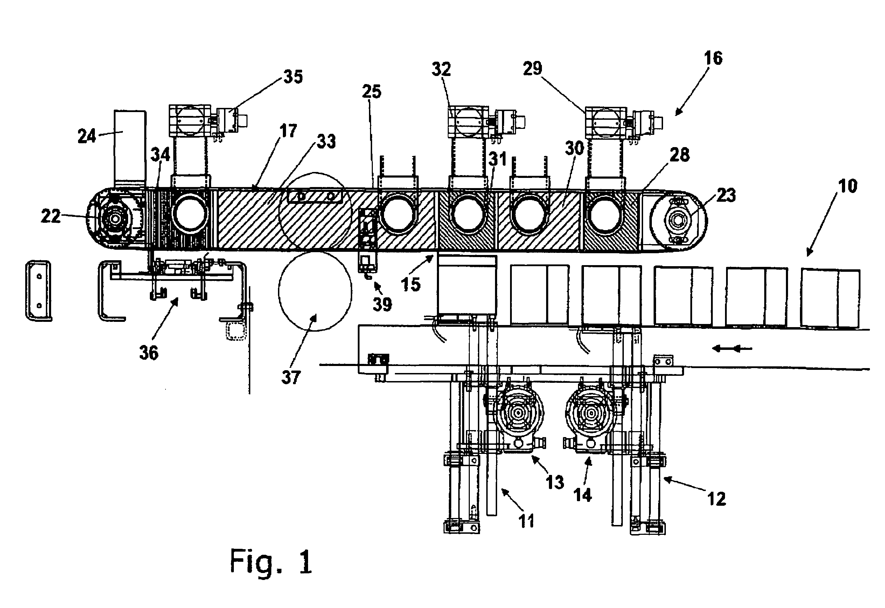

As can best be seen in Figure 1 a conveyor, generally indicated at 10 feeds in stacks of plates, from right to left, so that they are captured on one or other of the elevators 11, 12.

The elevators 11,12 are driven by respective motors 13, 14 to lift a respective stack from the conveyor 10 and to sequentially elevate the stack so that the uppermost plate in the stack lies within a datum region 15. The control of the elevators 11 and 12 is such that, preferably, only one stack has a plate in the datum region at any one time.

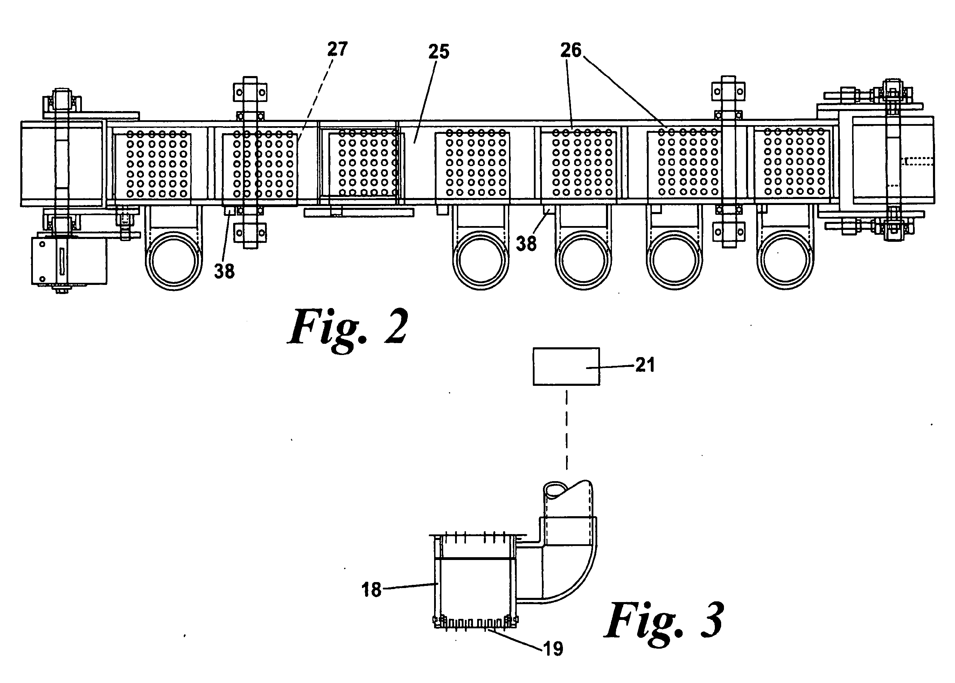

A pick up and release unit is generally indicated at 16. This comprises a central metal hollow body 17 which is divided into a number of side by side vacuum chambers, one of which 18 is shown illustratively in Figure 3. Each vacuum chamber 18 consists of a hollow chamber with a perforate floor 19 and an outlet 20, which is connected to a vacuum source 21. As will be described in more detail below, for a first set of chambers a valve is provided between the chamber 18 and the vacuum source 21 so that the chamber 18 can either be at negative pressure or not. A second set of chambers is constantly connected to the vacuum source 21. The floor 19 can be any suitable form of grid and indeed, it notionally could be open, although that would create potential problems of particles getting into the vacuum system and with belt stability as will be indicated below.

As can be seen in Figure 1 the body 17 forms, effectively, an elongate rectangular box. Sprockets 22, 23 are provided at respective ends of the body 17 and sprocket 22 can be driven by a motor 24. An endless belt 25 is mounted around the body 17 on the sprockets 22, 23 so that it can be driven around the body 17, with its underside travelling in a right to left direction.

As can be seen in Figure 2 the belt 25 has a plurality of perforate portions 26 spaced along its length. The cross sectional area of the perforate portions 26 are substantially similar to the cross section of a plate 27 of the type shown in the stacks 28. It will be understood that when a perforate portion 26 is aligned with a perforate floor 19 of a vacuum chamber 18 suction will pass through the belt 25.

The arrangement of vacuum chambers 18 in the body 17, from right to left, is as follows:
(a) Chamber 28 is a pick up chamber which has a valve 29.
(b) Chamber 30 is a constant vacuum chamber
(c) Chamber 31 is a second pick up chamber having a valve 32
(d) Chamber 33 is a constant vacuum chamber and
(e) Chamber 34 is a release chamber having a valve 35.

The release chamber 34 lies above a conveyor 36 onto which the plates are to be released to form a continuous line for passing to a group forming machine of the type which is well known to the person skilled in the art.

Also shown in the apparatus are a lug brushing station 37, which prepares lugs 38 on the battery plates 27 for a subsequent lead casting operation and a double plate sensor 39 for detecting if two plates have been picked up in error.

In operation, the motor 24 rotates the belt 25 so that its underside passes from right to left along the bottom of the body 17. One or other of the elevators 11, 12 raises its stack until its uppermost plate lies within the datum region 15. In Figure 1 it is elevator 11 which is in this condition. As a perforate portion 26 sweeps past the vacuum chamber 31, the uppermost plate will be exposed to the vertical lift created by the vacuum in the chamber 31 and the plate will be held against the belt 25. It is retained in that position by the vacuum in chamber 33 until the perforate portion 26 reaches chamber 34. When it has arrived valve 35 is closed cutting off the vacuum source 21 and allowing the plate 27 to be droped onto the conveyor 36.

Although in theory it is possible to run the apparatus without the use of the valves 29, 32 and 35, it is preferred that they are operated to put their chamber into the operative position at the moment when there is full overlap between the perforate portion 26 and the floor 19, so that there is a precise vertical lift or drop, rather than a progressive drag. As the belt 25 travels very close to the uppermost part of the stack, the air dragged round by the belt accelerates through the gap causing a reduced pressure over the uppermost plate which acts to separate it from the next plate in the stack. When the stack on the elevator 11 is almost used up, the elevator 12 will begin to elevate its stack towards chamber 28 and it plates 27 will be picked up adjacent chamber 28. It is this condition which is actually illustrated in the plan view of Figure 2 and it will be observed that plates 27 are adjacent each of the chambers on the underside of 25.

This configuration can operate as quickly as the carousel arrangement described in the aforementioned PCT application, but because the vacuum chambers are fixed, it is much cheaper to manufacture than to service and the fixed chambers provide an improved lift, because they are only acting along the longitudinal axis of the stack.

## Claims

1. Apparatus (16) for placing battery plates in a line from a stack of plates including an elevator (11) for receiving a stack of plates and for sequentially elevating the stack to maintain, in use, the uppermost plate in the stack in a datum region (15) lying between two parallel generally horizontal planes and a plurality of vacuum heads (26) arranged in a closed loop for sequentially passing over the elevator (11) for picking up the uppermost plate and for subsequently releasing the plate at a release position wherein the apparatus (16) includes an endless horizontal belt (25), a vacuum chamber (28) located adjacent the datum region for acting in a sense to lift the uppermost plate from the stack and a motor (24) for rotating the belt (25), **characterised in that** the endless horizontal belt has perforate portions (26) spaced along its length and constituting respective vacuum heads (26) and **in that** perforate portions are arranged for passing sequentially over the vacuum chamber (28), the vacuum heads passing with a fixed gap from the upper plane of the datum range.

2. Apparatus as claimed in claim 1 wherein the vacuum chamber (18) has an open or perforate wall (19) over which the spaced perforate portions (26) pass.

3. Apparatus as claimed in claim 2 further including a valve (29) for determining whether or not the vacuum chamber (28) is at a negative pressure.

4. Apparatus as claimed in any one of the preceding claims including at least two elevators (11, 12) spaced in the direction of travel of the belt (25) and a vacuum chamber (28, 32) associated with each elevator (11, 12).

5. Apparatus as claimed in any one of the preceding claims including a body (17) around which the belts (25) run, the body defining two sets of vacuum chambers (28, 32); the first set including the first mentioned vacuum chamber or chambers and the second set including one or more chambers (30, 33) for providing with the first set a continuous vacuum path from a datum region to the release position.

6. Apparatus as claimed in any one of the preceding claims further including a switchable vacuum chamber (34) at the release position.

## Patentansprüche

1. Vorrichtung (16) zur Plazierung von Batterieplatten in einer Reihe von einem Plattenstapel mit einem Lift (11) zur Aufnahme eines Plattenstapels und zum aufeinanderfolgenden Anheben des Stapels, um bei Benutzung die oberste Platte in dem Stapel in einem Bezugsbereich (15) zu halten, der zwischen zwei parallelen, im allgemeinen waagerechten Ebenen und mehreren Vakuumköpfen (26) liegt, die in einer geschlossenen Schleife angeordnet sind, so daß sie aufeinanderfolgend über dem Lift (11) vorbeilaufen, damit die oberste Platte ergriffen und danach diese Platte in einer Freigabeposition losgelassen wird, in der die Vorrichtung (16) ein endloses, waagerechtes Band (25) aufweist, wobei eine Vakuumkammer (28) neben dem Bezugsbereich liegt, um in dem Sinne zu wirken, daß die oberste Platte von dem Stapel abgehoben wird, und mit einem Motor (24) zum Drehen des Bandes (25), **dadurch gekennzeichnet, daß** das endlose, waagerechte Band perforierte Teile (26) aufweist, die mit Abstand entlang der Bandlänge liegen und entsprechende Vakuumköpfe (26) bilden, und daß diese perforierten Teile so angeordnet sind, daß sie aufeinanderfolgend über die Vakuumkammer (28) laufen, wobei die Vakuumköpfe beim Vorbeilaufen einen fixen Spalt von der oberen Ebene des Bezugsbereichs aufweisen.

2. Vorrichtung nach Anspruch 1, **dadurch gekennzeichnet, daß** die Vakuumkammer (18) eine offene oder perforierte Wand (19) aufweist, über die die beabstandeten perforierten Teile (26) laufen.

3. Vorrichtung nach Anspruch 2, ferner **gekennzeichnet durch** ein Ventil (29) zur Bestimmung, ob die Vakuumkammer (28) sich unter einem Unterdruck befindet oder nicht.

4. Vorrichtung nach einem der vorhergehenden Ansprüche, **gekennzeichnet durch** wenigstens zwei Lifte (11, 12), die in der Bewegungsrichtung des Bandes (25) mit Abstand angeordnet sind, und **durch** eine Vakuumkammer (28, 32), die jedem Lift (11, 12) zugeordnet ist.

5. Vorrichtung nach einem der vorhergehenden Ansprüche, **gekennzeichnet durch** einen Körper (17), um den die Bänder (25) laufen und der zwei Sätze Vakuumkammern (28, 32) bildet, wobei der erste Satz die erste genannte Vakuumkammer oder Vakuumkammern aufweist und der zweite Satz eine oder mehrere Kammern (30, 33), die mit dem ersten Satz eine kontinuierliche Vakuumbahn bilden, welche von einem Bezugsbereich zu der Freigabeposition führt.

6. Vorrichtung nach einem der vorhergehenden Ansprüche, ferner **gekennzeichnet durch** eine schaltbare Vakuumkammer (34) an der Freigabeposition.

## Revendications

1. Appareil (16) pour placer des plaques de batterie en une ligne à partir d'un empilement de plaques comprenant un élévateur (11) destiné à recevoir un empilement de plaques et à élever de manière séquentielle l'empilement pour maintenir, en utilisation, la plaque la plus élevée dans l'empilement dans une région de référence (15) s'étendant entre deux plans parallèles généralement horizontaux et une pluralité de têtes d'aspiration (26) agencés en une boucle fermée pour passer de manière séquentielle au-dessus de l'élévateur (11) pour saisir la plaque la plus élevée et pour libérer par la suite la plaque à une position de libération, l'appareil (16) comprenant une courroie horizontale sans fin (25), une chambre à vide (28) située adjacente à la région de référence, destinée à agir dans le but de soulever la plaque la plus élevée à partir de l'empilement et un moteur (24) destiné à faire tourner la courroie (25), **caractérisé par le fait que** la courroie horizontale sans fin a des parties perforées (26) espacées le long de sa longueur et constituant les têtes d'aspiration respectives (26) et **par le fait que** les parties perforées sont agencées pour passer de manière séquentielle au-dessus de la chambre à vide (28), les têtes d'aspiration passant avec un intervalle fixe par rapport au plan supérieur de la région de référence.

2. Appareil selon la revendication 1, dans lequel la chambre à vide (18) a une paroi ouverte ou perforée (19) au-dessus de laquelle passent les parties perforées espacées (26).

3. Appareil selon la revendication 2, comprenant en outre une vanne (29) pour déterminer si ou non la chambre à vide (28) est à une pression négative.

4. Appareil selon l'une quelconque des revendications précédentes, comprenant au moins deux élévateurs (11, 12) espacés dans la direction de déplacement de la courroie (25) et une chambre à vide (28, 32) associée à chaque élévateur (11, 12).

5. Appareil selon l'une quelconque des revendications précédentes, comprenant un corps (17) autour duquel tournent les courroies (25), le corps définissant deux ensembles de chambres à vide (28, 32) ; le premier ensemble comprenant la ou les chambres à vide susmentionnées et le second ensemble comprenant une ou plusieurs chambres (30, 33) destiné à fournir avec le premier ensemble un trajet de vide continu d'une région de référence à la position de libération.

6. Appareil selon l'une quelconque des revendications précédentes, comprenant en outre une chambre à vide commutable (34) à la position de libération.
